# EUROPÄISCHE PATENTSCHRIFT

(11) **EP 0 757 760 B1**
(45) Veröffentlichungstag und Bekanntmachung des Hinweises auf die Patenterteilung: **28.06.2000**
(21) Anmeldenummer: 95917353.5
(22) Anmeldetag: 21.04.1995
(51) Int. Cl.: F16D 48/02

(54) **VORRICHTUNG ZUR REDUZIERUNG DES DRUCKES EINER LASTSCHALTKUPPLUNG**
DEVICE FOR REDUCING THE PRESSURE IN A POWER SHIFT CLUTCH
DISPOSITIF DE REDUCTION DE LA PRESSION D'UN EMBRAYAGE COUPLABLE SOUS CHARGE

(30) Priorität: 28.04.1994 DE 4414804
(43) Veröffentlichungstag der Anmeldung: 12.02.1997
(73) Patentinhaber: ZF FRIEDRICHSHAFEN Aktiengesellschaft, 88038 Friedrichshafen (DE)
(72) Erfinder: BOHNER, Ulrich, D-88690 Uhldingen-Mühlhofen (DE)
(86) Internationale Anmeldenummer: EP9501520
(87) Internationale Veröffentlichungsnummer: WO9530099

(56) Entgegenhaltungen:
- US-A- 4 289 221
- US-A- 4 579 200
- US-A- 4 620 560
- US-A- 5 234 092

## Beschreibung

Die Erfindung betrifft eine Vorrichtung zur Reduzierung des Druckes in Lastschaltkupplungen nach der im Oberbegriff von Anspruch 1 näher definierten Art.

Druckreduzierventile dieser Art, die auch als Kriechventile bezeichnet werden, sind bei Antrieben für Arbeitsmaschinen, insbesondere Stapler, vorgesehen. Ein Druckreduzierventil dient dabei zum langsamen Fahren und dazu, das Fahrzeug sehr exakt an eine bestimmte Position zu bewegen. Diese "Zentimeterarbeit" wird auch als "Inchen" bezeichnet.

Dieses genaue Positionieren wird dabei dadurch erreicht, daß eine Lastschaltkupplung des Getriebes zum Rutschen gebracht wird. Hierzu wird der Druck in dem entsprechenden Kupplungszylinder entsprechend reduziert. Dies bedeutet, daß das Kriechventil als Druckreduzierventil arbeitet. Betätigt wird es in üblicher Weise vom Fahrer durch ein Fußpedal. Mit zunehmendem Pedalweg kann der Fahrer den Druck im Kupplungszylinder reduzieren und auf diese Weise die Fahrgeschwindigkeit verringern.

Im allgemeinen wird für diese langsame und exakte Fahrweise die für die jeweilige Fahrtrichtung zuständige Wendekupplung, nämlich die Vorwärtskupplung (KV) bzw. Rückwärtskupplung (KR), verwendet, da diese Kupplungen für erhöhte Rutschleistungen ausgelegt sind, wie sie beim Reversieren auftreten.

Bei Lastschaltgetrieben erfolgt die Druckbeaufschlagung der Kupplungszylinder mit einer hydraulischen Getriebesteuerung, welche Schaltventile für die einzelnen Kupplungszylinder und ein zentrales Drucksteuerventil zur Modulation des Druckaufbaues beinhaltet.

Die genannten Teile sind im allgemeinen in einem Gehäuse gemeinsam platzsparend untergebracht. Das Kriechventil bzw. Druckreduzierventil ist jedoch nur bei relativ wenigen Getriebeausführungen von Lastschaltgetrieben, wie z. B. bei Staplergetrieben, erforderlich. Dies bedeutet, es wird in der Praxis, wenn ein derartiges Kriechventil gewünscht wird, nicht in die Getriebesteuerung integriert, sondern als Zusatzaggregat extern angebaut. Es wird in der jeweiligen Druckleitung zwischen Getriebesteuerung und der Vorwärts- bzw. Rückwärtskupplung eingefügt.

Da nun das Druckreduzierventil jeweils in der Leitung nach bzw. hinter Schaltventilen für Vorwärts- bzw. Rückwärtsfahrt angeordnet ist, muß somit für deren Aktivierung zum langsamen und positionsgenauen Fahren je nach geschalteter Fahrtrichtung entweder in der Leitung zur Vorwärtskupplung oder in der Leitung zur Rückwärtskupplung der Druck entsprechend reduziert werden. Nachteilig ist damit, daß die zwei getrennten Druckleitungen zur Vorwärtskupplung und zur Rückwärtskupplung zwingend damit auch zwei hydraulisch getrennte Druckreduzierventile erfordern. Durch diese Ausgestaltung wird ein Lastschaltgetriebe, das mit derartigen Druckreduzier- bzw. Kriechventilen ausgestattet werden soll, entsprechend deutlich teurer und diese Lösung benötigt auch relativ viel Bauraum.

In der US-A 5,234,092 wird ein Druckregelventil mit zwei konzentrischen Ventilkolben in einem gemeinsamen Ventilgehäuse zur Ansteuerung von zwei Kupplungen offenbart. Dieses Ventil ist mit einem zentralen Druckzulauf versehen, welcher in Abhängigkeit von der Höhe des Ansteuerdrucks und der dadurch bedingten Stellung der beiden Kolben zueinander die Kupplungen unterschiedlich druckbeaufschlagt, so daß bei einer bestimmten Kolbenstellung der zentral bereitgestellte Pumpendruck auf beide Druckausgänge aufgeteilt wird und daß sich die Ansteuerung der beiden Kupplungen überschneidet.

In der DE-PS 35 10 803 ist ein Druckreduzierventil beschrieben, das eine Kupplungs- und Modulierfunktion ermöglicht. Das Druckreduzierventil hat dabei die Aufgabe, ein Arbeitsfahrzeug schnell bzw. ruckartig anfahren zu lassen. Dieses Druckreduzierventil ist nämlich dazu vorgesehen, z. B. einen Schaufellader ruckartig ins Erdreich stoßen zu lassen. Mit dem vorliegenden Arbeits- bzw. Einsatzgebiet ist das vorbekannte Druckreduzierventil und dessen Steuerung, durch die das Gegenteil erreicht werden soll, nicht vergleichbar.

Der vorliegenden Erfindung liegt die Aufgabe zugrunde, eine Vorrichtung der eingangs erwähnten Art für ein Lastschaltgetriebe, das mit Druckreduzierventilen für genaue Positionierarbeit versehen werden soll, einfacher auszugestalten.

Erfindungsgemäß wird diese Aufgabe durch die im kennzeichnenden Teil von Anspruch 1 genannten Merkmale gelöst.

Wie ersichtlich, wird die Funktion der beiden Druckreduzierventile, die ja für jede der beiden zu den Kupplungen führenden Druckleitungen erforderlich ist, in einem einzigen Ventil bzw. Ventilgehäuse vereinigt. Das erfindungsgemäße Druckreduzierventil beinhaltet eine getrennte Druckreduzierung für zwei separate Druckleitungen in einem gemeinsamen Regelventil. Hierzu ist es erfindungsgemäß erforderlich, daß der Regelkolben des erfindungsgemäßen Druckreduzierventiles gegenüber dem bisherigen Ventil die doppelte Anzahl von Steuerkanten und Regelflächen aufweist. Praktisch handelt es sich um zwei hydraulisch getrennte Regelventile, deren Steuerkanten nebeneinander auf einem gemeinsamen Regelkolben angeordnet sind.

Der Erfinder ging nämlich von der erfinderischen Erkenntnis aus, daß in der Praxis nie beide Druckreduzierventile gleichzeitig in Betrieb sein müssen, da ja die zu der Vorwärtskupplung bzw. zur Rückwärtskupplung führenden Druckleitungen stets nur wechselweise druckbeaufschlagt sind.

Eines der wesentlichsten Vorteile der vorliegenden Erfindung liegt darin, daß nunmehr anstelle von zwei Ventilen nur noch ein einziges Ventil benötigt wird. Das erfindungsgemäße Doppel-Kriechventil kann nahezu in der gleichen Größe wie das bekannte Kriechventil ausgebildet werden. Es besitzt grundsätzlich auch die gleiche Anzahl von Bauteilen. Ebenso ist der Fertigungsaufwand ähnlich wie bei den bekannten Kriechventilen. Dies bedeutet, daß die Herstellungskosten des erfindungsgemäßen Doppel-Kriechventiles ungefähr gleich hoch sind wie die Herstellungskosten für ein Einzelventil. In gleicher Weise reduziert sich auf diese Weise auch der erforderliche Bauraum nahezu auf die Hälfte im Vergleich zu den bisher erforderlichen zwei getrennten Ventilen.

Vorteilhafte Weiterbildungen und Ausgestaltungen ergeben sich aus den Unteransprüchen und dem nachfolgend anhand der Zeichnung beschriebenen Ausführungsbeispiel. Es zeigt:
- Fig. 1: einen Längsschnitt durch das erfindungsgemäße Druckreduzierventil;
- Fig. 2: ein Hydraulikschema für das erfindungsgemäße Lastschaltgetriebe in prinzipieller Übersicht;
- Fig. 3: eine graphische Darstellung der Kennlinie des erfindungsgemäßen Druckreduzierventiles.

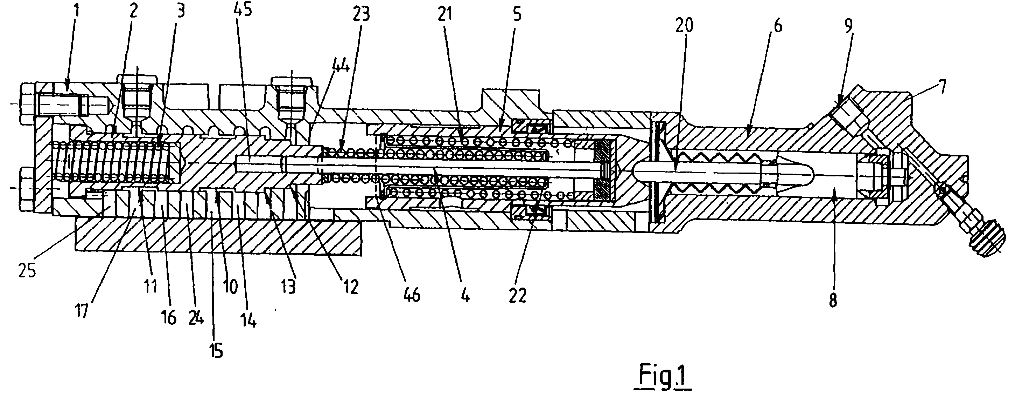

Das in der Fig. 1 dargestellte Druckreduzier- bzw. Kriechventil weist ein Ventilgehäuse 1, einen Regelkolben 2, eine Regelfeder 3, einen Umschalt- bzw. Betätigungskolben 5 mit einem Stößel 4 und einen Ansteuerzylinder 6 auf. Der Ansteuerzylinder 6 ist in einem an das Ventilgehäuse 1 angeflanschten Gehäuseteil 7 angeordnet und weist einen Ansteuerkolben 8 auf.

Das Druckreduzierventil wird hydrostatisch mittels eines Fluids, z. B. der Bremsflüssigkeit, betätigt. Ein nicht dargestellter Geberzylinder wird vom Fahrer aus durch ein Pedal bewegt. Der nicht dargestellte Geberzylinder verdrängt das Fluid über eine Ansteuerleitung 9 in den Ansteuerzylinder 6 und bewirkt damit über eine Verstellung des Ansteuerkolbens 8 eine Bewegung des Umschaltkolbens 5 nach innen.

Der Regelkolben 2 weist zwei Steuernuten 10 und 11 sowie zwei Druckregelflächen 12 und 13 auf. Im unbetätigten Zustand des Ventiles ist ein erster Druckeingangsanschluß 14 für den Druck der Vorwärtskupplung (pV) über die Steuernut 10 mit einem Ausgangsanschluß 15 verbunden, die zu einer zur Vorwärtskupplung führenden Druckzuleitung führt.

Ein zweiter Eingangsanschluß 16, der mit einer Druckleitung für die Rückwärtskupplung verbunden ist, ist über die Steuernut 11 mit einem Ausgangsanschluß 17, der an eine zur Rückwärtskupplung führende Druckleitung angeschlossen ist, verbunden.

Je nach geschalteter Fahrtrichtung wird der von der Getriebesteuerung kommende Öldruck über die Druckleitung 14 (pV) oder die Druckzuleitung 16 (pR) zur jeweiligen Kupplung 18 (KV) bzw. 19 (KR) geleitet.

Zum genauen Positionieren wird Betätigungsfluid von dem nicht dargestellten durch ein Pedal betätigten Geberzylinder in den Ansteuerzylinder 6 verdrängt. Der Ansteuerkolben 8 ist mit einem Bolzen 20 versehen, der auf den Betätigungskolben 5 drückt, wodurch dieser nach innen (in der Zeichnung nach links) gedrückt wird. Eine äußere Sollwertfeder 21 ist mit einer so starken Vorspannung eingebaut, daß diese zunächst nicht zusammengedrückt wird. Die Kraft wird über eine Federhülse 22 auf eine innere Sollwertfeder 23 übertragen, welche wiederum auf den Regelkolben 2 drückt. Auf diesem Wege wird der Regelkolben 2 in seine Regelstellung bewegt.

In dieser Regelstellung stehen die Steuernuten 10 und 11 gerade so, daß der Versorgungsdruck abgesperrt und die Verbindung des Kupplungsanschlusses 15 bzw. 17 mit einem Entlüftungsanschluß 24 bzw. 25 gerade geöffnet wird.

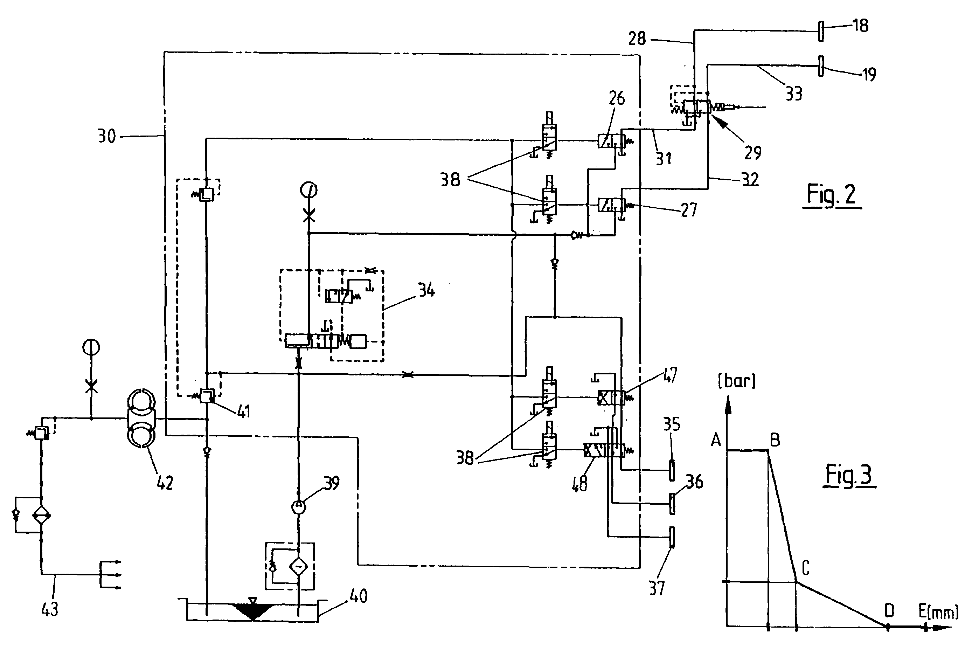

Nachfolgend wird die Funktion für einen geschalteten Vorwärtsgang erklärt. In diesem Falle ist durch Schaltventile 26 und 27 (siehe Schaltplan gemäß Fig. 2) der Getriebesteuerung der Anschluß 14 druckbeaufschlagt und der Anschluß 16 entlüftet. Die auf die Regelfläche 12 wirkende Kraft des Druckanschlusses 14 und die Kraft der Sollwertfeder 23 üben zusammen eine nach links gerichtete Kraft auf den Regelkolben 2 aus. Die Regelfeder 3 bewirkt eine nach rechts gerichtete Kraft auf den Regelkolben 2. Beide Kräfte stehen im Gleichgewicht. Wird der Betätigungskolben 5 weiterbewegt, so erhöht sich die Kraft der Sollwertfeder 23 weiter. Da die Kraft der Regelfeder 3 konstant bleibt, muß sich ein geringerer Kupplungsdruck einregeln. Der Regelkolben 2 bewegt sich minimal nach links, wodurch über die Steuernut 10 die Verbindung des Ausgangsanschlusses 15 zur Entlüftung 24 geöffnet wird, so daß der Druck in einer Druckzuleitung 28 zur Vorwärtskupplung 18 absinkt. Der Druck wird dabei proportional mit zunehmendem Weg des Betätigungskolbens 5 reduziert.

Bei einem genauen Positionieren bzw. beim "Inchen" über die Rückwärtskupplung 19 wird in äquivalenter Weise mit den entsprechend hierfür vorgesehenen Steuernuten und Regelflächen gearbeitet.

In dem hydraulischen Schaltplan gemäß Fig. 2 ist in einer Prinzipdarstellung das Schaltschema dargestellt. Das für beide zu den Kupplungen 18 und 19 führenden Druckzuleitungen 28 und 33 vorgesehene Druckreduzierventil 29 gemäß Fig. 1 ist dabei außerhalb der mit einer strichpunktierten Linie als Gehäuseumriß angegebenen Getriebesteuerung 30 angeordnet. Von den Umschaltventilen 26 und 27 der Getriebesteuerung führen Druckleitungen 31 und 32 zu den Eingangsanschlüssen 14 und 16 im Druckreduzierventil 29. Die Ausgangsanschlüsse 15 und 17 des Druckreduzierventiles 70 sind mit Druckzuleitungen 28 bzw. 33 versehen, die zu der Vorwärtskupplung 18 bzw. der Rückwärtskupplung 19 führen.

Die Getriebesteuerung 30 ist mit an sich bekannten Steuerteilen versehen und funktioniert in bekannter Weise, weshalb nachfolgend nur kurz darauf eingegangen wird. Ein Drucksteuerventil 34 dient dabei zur Erzeugung eines modulierten Druckanstieges für die Kupplungen 18 und 19 sowie weitere Gangkupplungen 35, 36 und 37. Weiterhin sind vier Magnetventile 38 vorgesehen, die die Schaltventile 26 und 27 für die Vorwärtskupplung 18 und die Rückwärtskupplung 19 und die Schaltventile 47 und 48 für die Gangkupplungen 35, 36 und 37 betätigen. Eine Pumpe 39 liefert den erforderlichen Druck für das Drucksteuerventil 34. Weiterhin ist ein Öltank 40 vorgesehen. Das an einem Hauptdruckventil 41 abströmende überschüssige Druckmittel wird zu einem Wandler 42 und von da aus über eine Leitung 43 zur Schmierung des Getriebes weitergeleitet.

In der Fig. 3 ist in einer graphischen Darstellung der Zusammenhang zwischen dem Kupplungsdruck und dem Weg des Betätigungskolbens dargestellt. In einem Bereich A-B findet keine Veränderung statt. In einem ersten Betätigungsbereich von B nach C nimmt der Druck über dem Weg des Betätigungskolbens 5 steil ab, weil die erste Sollwertfeder 23 eine hohe Federkonstante besitzt. Erreicht die Ansteuerkraft den Wert der Vorspannung der äußeren Sollwertfeder 21, so wird diese im weiteren Verlauf ebenfalls zusammengedrückt. Dies ist im Punkt C der Fall. Von diesem Punkt an ist als Sollwertfeder eine Reihenschaltung der beiden Federn 21 und 23 wirksam. Diese Reihenschaltung ergibt zusammen mit der geringeren Federkonstante der Sollwertfeder 21 einen flacheren Verlauf der Druckkennlinie im Bereich von C nach D.

Die erste steile Druckabsenkung dient dazu, mit wenig Pedalweg den Druck in die Nähe des Rutschbereichs der Kupplung zu bringen. Im restlichen Weg ist die flache Druckkennlinie wirksam. Durch die große Auflösung über dem Pedalweg kann der Fahrer auf diese Weise den Druck feinfühlig einstellen. Im Punkt D hat der Druck den Wert Null erreicht und die Kupplung ist damit ganz ausgekuppelt.

Das in der Fig. 1 dargestellte Druckreduzierventil erlaubt zusätzlich einen Überweg über den Punkt D hinaus bis zu einem Punkt E, wo der Betätigungskolben an einem Anschlag 44 im Ventilgehäuse 1 des Druckreduzierventiles 29 anschlägt. Im Bereich zwischen den Punkten D und E kommt das linke Ende des Stößels 4 des Betätigungskolbens 5 in Kontakt mit dem Grunde einer Bohrung 45 im Regelkolben 2. Der Regelkolben 2 wird dann nicht mehr über die Feder 23, sondern direkt über den Stößel 4 weiterbewegt. Dadurch wird erreicht, daß der freigegebene Öffnungsweg der Steuernut 10 bzw. 11 zur Entlüftung 24 bzw. 25 größer ist, als er nur über die Feder wäre. Auf diese Weise wird bei voll durchgetretenem Pedal ein großer Entlüftungsquerschnitt freigegeben und der Kupplungszylinder kann auf diese Weise sehr schnell entleert werden.

Wie erwähnt, ist die äußere Sollwertfeder 21 zwar stärker vorgespannt, aber sie besitzt eine geringere Federsteife, wodurch der gewünschte Druckabsenkungsverlauf erreicht wird.

Im Bedarfsfalle könnte sogar ein senkrechter Druckabfall erreicht werden, wenn man statt der inneren Feder 23 eine starre Hülse einsetzen würde. Auf diese Weise würde erst ab einem beliebigen Punkt C der flachere schräge Verlauf folgen. Wenn die innere Feder 23 entfallen würde, würde in diesem Falle auch die Hülse 22 entfallen. Statt dessen wäre an dieser Stelle eine plane Scheibe (siehe gestrichelte Linie 46 in Fig. 1) als Anschlag vorzusehen, die auf der einen Seite eine Anschlagfläche für die äußere Sollwertfeder 21 besitzen würde und auf der anderen Seite als Anschlagfläche für eine Buchse, die zwischen der Scheibe (Linie 46) und dem Regelkolben 2 anzuordnen wäre. Auf diese Weise würde eine feste Verbindung zwischen den beiden Teilen geschaffen werden. Anstelle einer gesonderten Buchse könnte zu diesem Zweck auch der Regelkolben 2 mit einer entsprechenden Verlängerung versehen werden, die bis zu der Anschlagscheibe des Betätigungskolbens 5 verlängert ist.

Neben dem Vorteil einer schnelleren Entlüftung der Kupplungszylinder durch den vorgesehenen Überweg von D nach E hat dieser Überweg auch den Vorteil, Toleranzungenauigkeit auszugleichen. Durch diesen Überweg von D nach E ist nämlich sichergestellt, daß der Druck am Ende des Betätigungsweges auf jeden Fall auf Null ist.

Konstruktiv wird dies dadurch erreicht, daß in der Endregelstellung des Regelkolbens 2 der Betätigungskolben 5 noch einen Abstand von wenigen Millimetern vor der Anschlagkante 44 aufweist. Dies bedeutet, in der Praxis sind die entsprechenden Längen, insbesondere die Länge des Betätigungskolbens 5, entsprechend zu wählen.

Alternativ dazu oder als zusätzliche Sicherheit kann auch vorgesehen sein, daß der Stößel 4 am Grund der Bohrung 45 in dem Regelkolben 2 anschlägt und diesen damit in eine Entlüftstellung bringt, und zwar im Bereich von D nach E, bevor der Betätigungskolben 5 zur Anlage an dem Anschlag 44 käme.

### Bezugszeichen

- 1: Ventilgehäuse
- 2: Regelkolben
- 3: Regelfeder
- 4: Stößel
- 5: Betätigungskolben
- 6: Ansteuerzylinder
- 7: Gehäuseteil
- 8: Ansteuerkolben
- 9: -
- 10: Steuernuten
- 11: Steuernuten
- 12: Druckregelfläche
- 13: Druckregelfläche
- 14: Druckleitung
- 15: Ausgangsanschluß
- 16: Druckzuleitung
- 17: Ausgangsanschluß
- 18: Kupplung (KV)
- 19: Kupplung (KR)
- 20: Bolzen
- 21: Sollwertfeder
- 22: Federhülse
- 23: innere Sollwertfeder
- 24: Entlüftungsanschluß
- 25: Entlüftungsanschluß
- 26: Schaltventil
- 27: Schaltventil
- 28: Druckzuleitungen
- 29: Druckreduzierventil
- 30: Getriebesteuerung
- 31: Druckzuleitung
- 32: Druckleitung
- 33: Druckleitungen
- 34: Drucksteuerventil
- 35: Gangkupplung
- 36: Gangkupplung
- 37: Gangkupplung
- 38: Magnetventile
- 39: Pumpe
- 40: Öltank
- 41: Hauptdruckventil
- 42: Wandler
- 43: Leitung
- 44: Anschlag
- 45: Bohrung
- 46: gestrichelte Linie
- 47: Schaltventil
- 48: Schaltventil

## Patentansprüche

1. Vorrichtung zur Reduzierung des Druckes in Lastschaltkupplungen, wobei ein Druckreduzierventil (29) in Druckzuleitungen (28, 33) zu Lastschaltkupplungen (18, 19) angeordnet ist und das Druckreduzierventil (29) mit einem in einen Ventilgehäuse (1) angeordneten Regelkolben (2) mit einer Regelfeder (3) zur Ansteuerung von wenigstens zwei Lastschaltkupplungen (18, 19) vorgesehen ist und der Regelkolben (2) ansteuerbar, beispielsweise mit einem Ansteuerdruck beaufschlagbar, ist, dadurch **gekennzeichnet,** daß das Druckreduzierventil (29) wenigstens einem Schaltventil (26, 27) nachgeordnet und daß ein Ansteuerzylinder (6), welcher Bestandteil des Druckreduzierventils (29) ist, mit einem Ansteuerkolben (8) vorgesehen ist und daß der Regelkolben (2) mit zwei Sätzen von Steuerkanten und Steuernuten (10, 11) zur getrennten Ansteuerung der Richtungskupplungen versehen ist, wobei ein Satz der Steuerkanten und Steuernuten jeweils einen Eingangsanschluß (14, 16) und einen damit verbindbaren Ausgangsanschluß (15, 17) für die Druckzuleitungen (28, 33) aufweist.

2. Vorrichtung nach Anspruch 1, dadurch **gekennzeichnet,** daß der Betätigungskolben (5) mit wenigstens einer Sollwertfeder (21) versehen ist.

3. Vorrichtung nach Anspruch 2, dadurch **gekennzeichnet,** daß der Betätigungskolben (5) mit zwei Sollwertfedern (21, 3) mit unterschiedlichen Vorspannungen versehen ist.

4. Vorrichtung nach Anspruch 1, 2 oder 3, dadurch **gekennzeichnet,** daß der Betätigungskolben (5) mit einem Überweg in dem Ventilgehäuse (1) eingebaut ist.

5. Vorrichtung nach Anspruch 4, dadurch **gekennzeichnet,** daß der Betätigungskolben (5) in seiner Endstellung noch vor einem Anschlag (44) des Ventilgehäuses (1) liegt, bevor der Regelkolben (2) durch den Weg des Betätigungskolbens (5) in seine Entlüftstellung gebracht ist.

6. Vorrichtung nach einem der Ansprüche 1 bis 5, dadurch **gekennzeichnet,** daß der Betätigungskolben (5) mit einem Stößel (4) versehen ist, an dem Regelkolben (2) anschlägt und diesen in Entlüftstellung bringt.

7. Vorrichtung nach einem der vorhergehenden Ansprüche, dadurch **gekennzeichnet,** daß der Ansteuerkolben (8) einenends mit einem Ansteuerdruck beaufschlagbar ist und anderenends mittels des Betätigungskolbens (5) auf den Regelkolben (2) einwirkt.

## Claims

1. Device to reduce pressure levels in powershift clutches whereby a pressure reducing valve (29) is fitted in the pressure pipes (28, 33) supplying the powershift clutches (18, 19) and the pressure reducing valve (29) is fitted with a control piston (2) and control spring (3) fitted in a valve housing (1) and the control piston (2) can be activated, for example it can be pressurized with activation pressure and moreover the device is **characterized in that** the pressure reducing valve (29) is assigned at least one shift valve (26, 27) and that an activation cylinder (6) which forms part of the pressure reducing valve (29) is fitted with an activation piston (2) and two sets of control edges and control grooves (10, 11) for the separate activation of the directional clutches whereby one set of the control edges and control grooves each exhibits one input connection (14, 16) and one associated output connection (15, 17) for the pressure pipes (28, 33).

2. Device in accordance with requirement 1, **characterized in that** the actuation piston (5) is fitted with at least one nominal value spring (21).

3. Device in accordance with requirement 2, **characterized in that** the actuation piston (5) is fitted with two nominal value springs (21, 3) with different pretensions.

4. Device in accordance with requirement 1, 2 or 3, **characterized in that** the actuation piston (5) is installed in the valve housing (1) with excess travel.

5. Device in accordance with requirement 4, **characterized in that** the actuation piston (5) reaches its end position even before a detent (44) of the valve housing (1) and does so before the control piston (2) is brought into its venting position by the stroke of the actuation piston (5).

6. Device in accordance with requirements 1 to 5, **characterized in that** the actuation piston (5) is fitted with a tappet (4), butts against the control piston (2) and moves this into its venting position.

7. Device in accordance with one of the above requirements, **characterized in that** one end of the activation piston (8) is subjected to activation pressure and the other end is moved onto the control piston (2) by the actuation piston (5).

## Revendications

1. Dispositif de réduction de la pression à l'intérieur d'embrayages couplables sous charge, le dit dispositif comportant une soupape réductrice (29) installée dans les conduites d'amenée de pression (28, 33) des embrayages couplables sous charge (18, 19), celle-ci étant équipée d'un piston de réglage (2) disposé dans un carter de soupape (1), le dit piston de réglage (2) comportant un ressort de réglage (3) pour le pilotage d'au moins deux embrayages couplables sous charge (18, 19), et le dit piston de réglage (2) pouvant être piloté, par exemple pressurisé par l'intermédiaire d'une pression de pilotage, **caractérisé en ce que** la soupape réductrice (29) est disposée en aval d'au moins une soupape de commande (26, 27) et en ce qu'il est prévu un cylindre de pilotage (6) avec un piston de pilotage (8), étant partie intégrante de la soupape réductrice (29), et en ce que le piston de réglage (2) est doté de deux groupes d'arêtes et rainures de commande (10,11), afin de permettre un pilotage séparé des embrayages de direction, sachant qu'un des groupes d'arêtes et de rainures de commande présente respectivement un raccord d'entrée (14, 16) et un raccord de sortie (15, 17) conncetables pour les conduites d'amenée de pression (28,33).

2. Dispositif selon la revendication 1, **caractérisé en ce que** le piston d'actionnement (5) est doté d' au moins un ressort de valeur de référence (21).

3. Dispositif selon la revendication 2, **caractérisé en ce que** le piston d'actionnement (5) est doté de deux ressorts de valeur de référence (21, 3) présentant des précontraintes différentes.

4. Dispositif selon les revendications 1 et 2, **caractérisé en ce que** le piston d'actionnement (5) est monté, avec une surcourse, dans le carter de soupape (1).

5. Dispositif selon la revendication 4, **caractérisé ce que le** piston d'actionnement (5), dans sa position de fin de course, se trouve encore devant une butée (44) du carter de soupape (1), avant que le piston de réglage (2) soit amené en sa position de ventilation par la course du piston d'actionnement (5).

6. Dispositif selon les revendications 1-5, **caractérisé en ce que** le piston d'actionnement (5) est doté d'un poussoir (4), et en ce qu'il est arrêté au piston de réglage (2) en amenant celui-ci en position de ventilation.

7. Dispositif selon une des revendications ci-dessus, **caractérisé en ce que** le piston de pilotage (8) peut être pressurisé d'une extrémité avec une pression de pilotage et en ce qu'il agit de l'autre extrémité, à l'aide du piston d'actionnement (5), sur le piston de réglage (2).
